# Europäisches Patentamt
# European Patent Office
# Office européen des brevets

(19)

(11) Veröffentlichungsnummer : **0 450 331 B1**

(12)
# EUROPÄISCHE PATENTSCHRIFT

(45) Veröffentlichungstag der Patentschrift :
**09.06.93 Patentblatt 93/23**

(51) Int. Cl.$^5$ : **B29C 67/22**, C08J 9/00

(21) Anmeldenummer : **91103360.3**

(22) Anmeldetag : **06.03.91**

(54) Verfahren zur Herstellung von geschäumten Polystyrolfolien.

(30) Priorität : **05.04.90 DE 4011003**

(43) Veröffentlichungstag der Anmeldung :
**09.10.91 Patentblatt 91/41**

(45) Bekanntmachung des Hinweises auf die
Patenterteilung :
**09.06.93 Patentblatt 93/23**

(84) Benannte Vertragsstaaten :
**AT BE CH DE DK ES FR GB GR IT LI LU NL SE**

(56) Entgegenhaltungen :
EP-A- 0 055 437
BE-A- 706 673
FR-A- 1 525 940
US-A- 3 275 720
US-A- 4 207 402
US-A- 4 649 001

(73) Patentinhaber : **GERRO PLAST GMBH
Kunststoffartikel
Postfach 12 02 10 Heyestrasse 178
D-4000 Düsseldorf 12 (US)**

(72) Erfinder : **Sturm, Wilfried
Friedigstrasse 16
W-4000 Düsseldorf 12 (DE)**
Erfinder : **Fumei, Giancarlo John
1407 Briargrove Way
Oldsmar, Florida 34677 (US)**

(74) Vertreter : **Müller, Enno et al
Rieder & Partner Corneliusstrasse 45
W-5600 Wuppertal 11 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 450 331 B1

**Beschreibung**

Die Erfindung betrifft ein Verfahren zur Herstellung von geschäumten Polystyrolfolien, wie sie beispielsweise zur Herstellung von Formkörpern, d. h. Bechern, Lebensmittel-Behältnissen oder dergleichen, aber auch zur Herstellung von Etiketten Anwendung finden. Die Erfindung betrifft insbesondere ein Verfahren zur Herstellung von einem mehrlagigen, vorzugsweise zweilagigen Verbund einer geschäumten Polystyrolfolie mit einer koextrudierten, vorzugsweise ungeschäumten Folie, insbesondere zur Weiterverarbeitung zu Etiketten oder Formkörpern unter Ausnutzung des Schrumpfvermögens der Folien. Hierbei wird eine Polystyrolharzmasse zusammen mit Stickstoff und/oder Kohlendioxid als Treibmittel und einem Porenbildner aus der Düse eines Extruders extrudiert und die extrudierte Masse vor dem Abkühlen unter den Erweichungspunkt aufgeblasen.

Ein Verfahren zur Herstellung von Polystyrolfolien, wie es vorstehend vorausgesetzt ist, ist aus dem europäischen Patent 55 437 bekannt. Dort sind jedenfalls Kohlendioxid und Stickstoff als mögliche Treibmittel erwähnt. Die produzierten Folien sind jedoch insbesondere für eine Etikettenherstellung nicht zufriedenstellend. Es stellt sich eine relativ rauhe Oberfläche und damit eine schlechte Bedruckbarkeit ein. Auch die Weiterverarbeitung zu Behältnissen läßt sich mit einer solchen Folie nur schlecht vornehmen. Es ist eine gewisse Steifigkeit der Folie und eine in möglichst engen Grenzen regelbare Foliendicke erforderlich.

Ausgehend von dem vorbeschriebenen Stand der Technik stellt sich der Erfindung die Aufgabe, das Verfahren zur Herstellung von geschäumten Polystyrolfolien so weiterzubilden, daß sich eine materialsparende und möglichst wenig anfällige Produktion von geschäumten Polystyrolfolien ergibt, welche Folien auch möglichst alterungsunempfindlich und gut bedruckbar sind.

Diese Aufgabe ist bei einem Verfahren nach Anspruch 1, Anspruch 2 oder Anspruch 3 gelöst.

Erfindungsgemäß ist darauf abgestellt, daß als Treibmittel ausschließlich Stickstoff, ausschließlich Kohlendioxid oder gegebenenfalls eine Mischung aus beiden verwendet wird und daß die eingesetzte Menge an Stickstoff bzw. Kohlendioxid in Bezug auf das Folienflächengewicht in bestimmten Grenzen gehalten ist. Pro Kilogramm geschäumter Folie liegt die Grenze bei Stickstoff bei 1/30 bis 1/50 (in Normlitern gemessen) des Folienflächengewichtes (in Gramm pro Quadratmeter gemessen) und bei 1/20 bis 1/35 an Kohlendioxid (in Normlitern gemessen) des Folienflächengewichtes (wiederum in Gramm pro Quadratmeter gemessen). Bei einer Mischung aus Stickstoff und Kohlendioxid ergibt sich ein entsprechender Bereich. Durch den ausschließlichen Einsatz von Stickstoff als Treibmittel gelingt es, den Anteil an Porenbildner drastisch zu reduzieren und dennoch neben einer stark verringerten Dichte der geschäumten Polystyrolfolie eine Folienstruktur bereit zu stellen, die eine für das Bedrucken und die Weiterverarbeitung insbesondere zu Behältern ausreichende Oberflächenbeschaffenheit besitzt. Es hat sich überraschend gezeigt, daß selbst bei sehr geringen Mengen an Stickstoff und/oder $CO_2$ von etwa 0,8 bis 1,6 NL pro Kilogramm Polystyrolschaum Dichten im Bereich zwischen 250 und 350 g/l erzielbar sind. Die Foliendicke kann aufgrund der verringerten Dichte angehoben werden, wodurch der Gefahr von Faltenbildung wirksam entgegengetreten werden kann. Die Dichteverringerung hat den weiteren Vorteil, daß die Foliendicke quer zur Extrusionsrichtung leichter steuerbar ist, was der Bedruckbarkeit der Folien insbesondere in Verbindung mit der sich einstellenden kleineren Porenquerschnittfläche zugutekommt. Der als ausschließliches Treibmittel verwendete Stickstoff und/oder $CO_2$ wird im Polystyrolharz nicht gelöst oder größtenteils nicht gelöst ($CO_2$). Zusätzlich zu dem Treibmittel wird eine (chemisch) zersetzungsfähige Pulvermischung insbesondere aus Natriumbicarbonat und Zitronensäure verwendet. Durch die Zersetzung entstehen Gase wie insbesondere $CO_2$. Es kann auch beispielsweise Azodicarbonamid als Bestandteil verwendet werden. Es ist möglich, die Steifigkeit der Folie durch das Aufblasverhältnis, d. h. das Verhältnis von Düsenquerschnitt und nachgeschaltetem Kühldorn-Querschnitt zu steuern. Es ergibt sich auch der Vorteil, daß aufgrund der fehlenden Löslichkeit des Treibmittels eine alterungsunempfindliche Polystyrol-Schaumfolie entsteht, was deren Verarbeitung weiter erleichtert. Dies ist insbesondere bei der Weiterverarbeitung der Schaumfolie unter Ausnutzung des Schrumpfvermögens der Schaumfolie von besonderem Vorteil, da die Lagerungs-Zeitdauer bei der Beurteilung des Schrumpfverhaltens keine Berücksichtigung mehr finden muß. Dabei zeichnet sich das erfindungsgemäße Verfahren darüber hinaus durch ein Höchstmaß an Umweltverträglichkeit aus, da keinerlei ozonschädigende Gase verwendet werden bzw. bei der Herstellung entstehen.

Es hat sich überraschenderweise gezeigt, daß es bereits mit einem Anteil von Stickstoff im Bereich zwischen 0,5 und 2 Normliter/kg Polystyrolschaum bei einem Porenbildner-Anteil von 0,3% gelingt, die Foliendichte unter 350 g/l zu senken. Hierdurch ergibt sich nicht nur eine gesteigerte Wirtschaftlichkeit des Herstellungsverfahrens, sondern darüber hinaus eine leichtere Steuerbarkeit der Foliendicke, insbesondere quer zur Extrusionsrichtung, wodurch die gewünschte Folienqualität reproduzierbar gesteuert werden kann.

Die Weiterverarbeitung geschäumter Polystyrolfolien erfolgt regelmäßig durch Erwärmung der Folie über den Erweichungspunkt. Die Erweichungstemperatur wird bislang gewöhnlich durch Verwendung von fluorierten Chlorkohlenwasserstoffen (FCKW) als Treibmittel gesenkt, um den Energieverbrauch bei der Herstellung möglichst klein zu halten. Eine besonders vorteilhafte Weiterbildung des erfingungsgemäßen Verfahrens sieht vor, die Wirtschaftlichkeit des Herstellungsverfahrens ohne Verwendung von derartigen umweltschädlichen Treibmitteln dadurch zu verbessern, daß ein Polystyrolharz mit einem mittleren Molukulargewicht von etwa 20 - 32 x $10^4$ (bestimmt nach der Gelpermeations-Chromatographie-Methode) verwendet wird. Durch geeignete Abmischung verschiedener Polystyrol-Typen, d. h. durch Mischungen eines hochmolekularen Typs mit einem niedrigmolekularen Typ, gelingt es, eine Optimierung der Materialeigenschaften im Hinblick auf verschiedene Kriterien vorzunehmen. So kann die erforderliche Festigkeit und die Schrumpffähigkeit der Schaumfolie durch die hochmolekulare Komponente und die für das Vermeiden von Bahnrissen entscheidende Zähigkeit und Abriebfestigkeit der Folien durch die niedermolekulare Rohstoff-Type bereitgestellt werden.

Die Koextrusion von mehrschichtigen Folien hat den besonderen Vorteil, daß das Auftreten von Rissen in einem Randbereich der geschäumten Polystyrolfolie in Kauf genommen werden kann, wenn dieser Bereich durch eine weitere Schicht abgedeckt wird.

Nachstehend wird anhand schematischer Zeichnungen das erfindungsgemäße Verfahren näher erläutert. Es zeigen:

Fig. 1    eine Seitenansicht einer Vorrichtung zur Durchführung des erfindungsgemäßen Verfahrens zur Herstellung von geschäumten Polystyrolfolien;

Fig. 2    eine Teil-Schnittansicht einer Rumpf-Form, die bei der Herstellung von Bechern Anwendung findet (schematisiert und hinsichtlich der Foliendicke übertrieben);

Fig. 3    in vergrößertem Maßstab einen Schnitt durch eine mehrschichtig aufgebaute Polystyrol-Schaumfolie; und

Fig. 4    eine gesonderte, schematische Querschnittsdarstellung eines Bechers (teilweise).

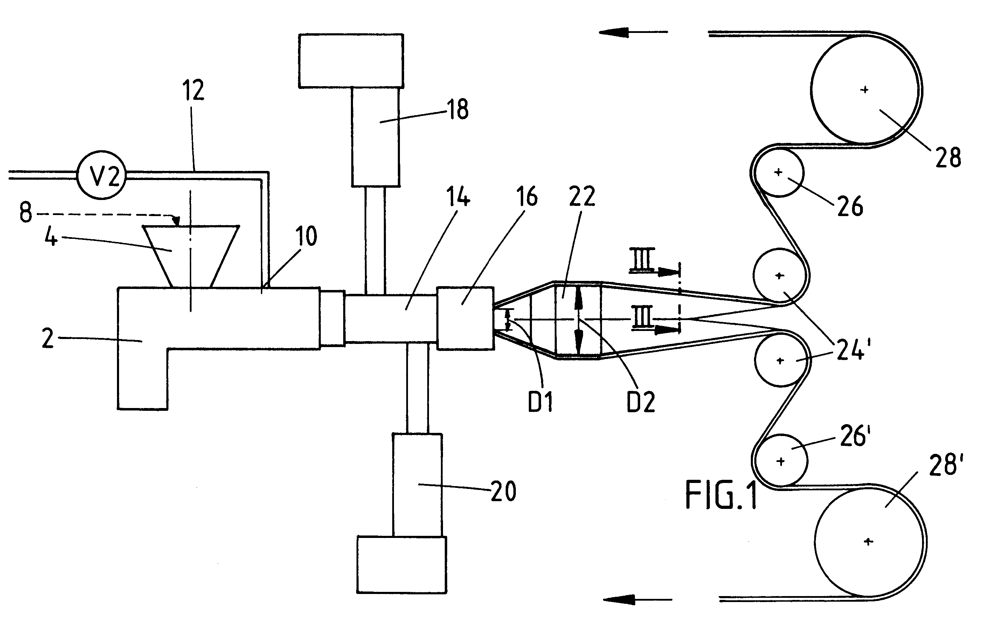

In Fig. 1 ist mit dem Bezugszeichen 2 ein Extruder bezeichnet, der einen Eingabetrichter 4 für das zu extrudierende Polystyrolharz aufweist. Im Extruder 2 wird das gegebenenfalls als Abmischung verschiedener Polystyrolharz-Typen vorliegende Polystyrolharz-Gemisch aufgeschmolzen und geknetet sowie einerseits mit einem Porenbildner und andererseits mit einem Treibmittel vermengt. Zu diesem Zweck wird unmittelbar in den Eingabetrichter 4 bei 8 Porenbildner in Form einer Pulvermischung aus Natriumbicarbonat und Zitronensäure in den Extruder 2 eingespeist.

Das Bezugszeichen 10 bezeichnet einen Anschluß für eine Zuleitung 12, über die Treibmittel in Form von Stickstoff und/oder Kohlendioxid in den Extruder 2 geleitet werden kann. Um die Treibmittelmenge an den Polystyrolharz-Durchsatz anpassen zu können, ist in der Zuleitung 12 eine Ventileinrichtung $V_1$ vorgesehen, die in der Fig. 1 schematisch angedeutet ist.

Mit 16 ist eine Extrusions-Düse bezeichnet, aus der das über den Erweichungspunkt des Polystyrolharzes erhitzte und mit dem Porenbildner und dem Treibmittel versetzte Material in Form eines Schlauchs extrudiert wird. Der Extrusions-Düse ist ein Bereich 14 vorgeschaltet, mit dem ein mehrschichtiger Aufbau der geschäumten Polystyrolfolie erzielbar ist. Einer ersten Schicht, die aus dem Extruder 2 in den Bereich 14 gelangt, wird von der einen Seite mittels eines zweiten Extruders 18 eine Deckschicht und von der anderen Seite mittels eines dritten Extruders 20 eine Basisschicht zugefügt, so daß aus der Extrusions-Düse 16 eine dreischichtige geschäumte Polystyrolfolie abgegeben wird. Diese Folie wird um ein vorbestimmtes Verhältnis $D_2/D_1$ aufgeblasen, wobei $D_2$ den Durchmesser eines Kühldorns 22 und $D_1$ den Durchmesser des Düsenaustritts bezeichnet. Der Kühldorn 22 hat die Funktion, die geschäumte Polystyrolfolie unter den Erweichungspunkt abzukühlen. Die Länge des Kühldorns 22 ist derart gewählt, daß die Temperatur der extrudierten geschäumten Polystyrolfolie beim Verlassen des Kühldorns 22 ausreichend niedrig ist, um eine Weiterverarbeitung der Folie durchführen zu können. Mit 24, 24', 26, 26' und 28, 28' sind Umlenkwalzen bezeichnet, über die die Polystyrolfolie entweder zu einer Weiterverarbeitungsstation oder einer Zwischenlagerungswalze zugeführt wird, nachdem sie nach Verlassen des Kühldornes durch Schlitze geteilt ist.

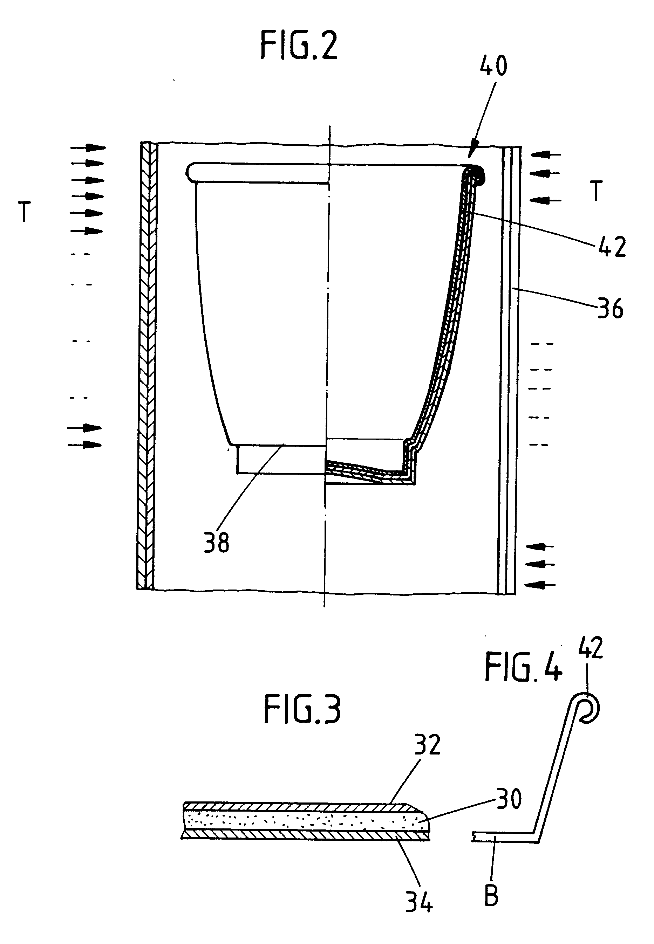

In Fig. 3 ist in vergrößertem Maßstab ein Schnitt gemäß III-III durch die koextrudierte Polystyrolfolie gezeigt. Der Kernbereich der Folie ist mit 30, die Deckschicht mit 32 und die Basisschicht mit 34 bezeichnet. Die Schichten 32 und 34 können aus ungeschäumtem Material, wie z. B. aus Polystyrol oder einer Kombination aus Polystyrol mit weiteren Polyolifinen bestehen. Sie werden als Koextrusionsdeckschicht aufgebracht. Fig. 4 zeigt eine schematische, teilweise Wiedergabe eines Becherquerschnitts.

Die Ventileinrichtungen $V_1$ und die Zugabe des Porenbildners werden an den Durchsatz des Polystyrol-Harzes im Extruder angepaßt, so, daß der Anteil an Stickstoff pro Kilogramm geschäumter Folie im Bereich von 1/30 bis 1/50 (in Normlitern gemessen) des Folienflächengewichtes (in Gramm pro Quadratmeter gemessen) liegt, bzw. der Anteil an Kohlendioxid pro Kilogramm geschäumter Folie entsprechend bei 1/20 bis 1/35. Hierbei liegt der Porenbildner im Bereich von 0,2 bis 1,0%, bezüglich Folien zur Etikettenherstellung bevorzugt bei 0,4 bis 0,6 %. Damit liegt die eingesetzte Menge an Porenbildner in einem Bereich, der herkömmlich bei Verwendung von üblichen Treibmitteln, wie z. B. fluorierten Chlorkohlenwasserstoffen eingehalten wird. Damit ergibt sich eine Foliendichte im Bereich zwischen 180 bis 320 g/l, was zur Folge hat, daß die Foliendicke quer zur Extrusionsrichtung sehr einfach geregelt werden kann. Durch Variation des Aufblasverhältnisses, d. h. des Verhältnisses $D_2/D_1$ kann die Steifigkeit und/oder Oberflächenbeschaffenheit der geschäumten Polystyrolfolie nach Wunsch gesteuert werden, um beispielsweise eine ausreichend gute Bedruckbarkeit und Weiterverarbeitungsfähigkeit der Folie bereitzustellen. Bei größerer Steifigkeit können auch kleinere Zellen vorgesehen werden bzw. sind diese tolerierbar.

Aus der vorstehenden Beschreibung wird deutlich, daß neben den überraschenden Vorteilen bei der Herstellung der extrudierten geschäumten Polystyrolfolie auch lediglich Mittel verwendet werden, die unter Umweltgesichtspunkten sehr vorteilhaft sind. Überdies sind diese Materialien lebensmitteltechnisch völlig unbedenklich. Darüber hinaus hat sich gezeigt, daß auf diese Weise extrudierte geschäumte Polystyrolfolie alterungsunempfindlich ist; die Folie kann somit entweder ohne einen Alterungsschritt sofort weiterverarbeitet, beispielsweise auf eine bestimmte Form geschrumpft werden oder aber über einen langen Zeitraum zwischengelagert werden, ohne dadurch die Verarbeitungseigenschaften spürbar zu verändern.

In Fig. 2 ist eine Möglichkeit der Weiterverarbeitung einer Mehrschicht-Folie angedeutet. Bei dieser Art der Weiterverarbeitung wird aus einer Mehrschicht-Polystyrolfolie 36 unter Temperatureinwirkung ein Becher geformt, indem das Schrumpfvermögen der Folie 36 ausgenutzt wird. Hierzu wird die entweder frisch extrudierte oder zwischengelagerte schlauchförmige Folie 36 über einen Schrumpfkern 38 geführt. Anschließend wird die Folie 36 über den Erweichungspunkt erwärmt, wodurch der Schrumpfprozeß einsetzt. Die Folie 36 schmiegt sich unter Volumenverkleinerung an die Außenoberfläche des Schrumpfkerns 38 an. Es wird ein Boden B eingesetzt und am Randbereich 40 eine Mundrolle 42 angeformt.

Es hat sich gezeigt, daß die nach dem vorstehend beschriebenen Verfahren hergestellte geschäumte Polystyrolfolie ausreichend stabil ist, um selbst im Bereich der Mundrolle 42 das Auftreten von Falten, insbesondere im Bereich der Bechermantelwand unterhalb der Mundrolle zuverlässig auszuschließen.

Nachfolgend wird ein Beispiel für die Herstellung einer geschäumten Polystyrolfolie näher beschrieben:

Es wurde ein Polystyrolharz mit einem mittleren Molekulargewicht von ca. 240.000 verwendet. Der Erweichungspunkt dieses Polystyrolharzes lag bei 94° C. Dem Polystyrolharz wurde 0,3% Porenbildner in Form einer Pulvermischung aus Natriumbicarbonat und Zitronensäure zugefügt. Als Treibmittel wurde ausschließlich Stickstoff mit einer Menge von ca. 0,8 bis 1,6 Normliter/kg Polystyrolschaum verwendet.

Es ergab sich eine geschäumte Polystyrolfolie mit einer Foliendichte im Bereich zwischen 300 und 350 g/l. Diese extrudierte Folie wurde über einen Kühldorn gezogen, so daß sich eine Foliendicke von etwa 185 µm ergab. Das Flächengewicht der geschäumten Polystyrolfolie lag damit bei etwa 57 g/m$^2$, geeignet für die Herstellung von Etikettenhülsen.

Die extrudierte geschäumte Polystyrolfolie kann ohne Zwischenlagerung zu Etikettenhülsen verarbeitet werden, wobei sich keinerlei Probleme hinsichtlich der Bedruckbarkeit ergeben. Auch kann die Polystyrolfolie für die Herstellung von Bechern und Schalen verwendet werden, wobei hierbei auch die Ausbildung der Mundrolle unproblematisch ist.

Auf einer folgenden Seite ist noch eine Übersicht der gemäß der Anmeldung erzielten Verbrauchsmengen für die Treibmittel Stickstoff und Kohlendioxid in Abhängigkeit von der Dicke, Dichte und dem Flächengewicht der Folien gegeben.

| Anwendungsfall | Materialdaten | | | Nukl. mittel (%) | Verbrauchsanteile | |
|---|---|---|---|---|---|---|
| | Dicke (μm) | Dichte <1> (g/l) | Flächen-gewicht (g/m²) | | Stick-stoff $N_2$ | Kohlen-dioxid $CO_2$ |
| Etiketten | 180 | 320 | 58 | 0,4-0,6 | 1,7NL/kg | 2,5NL/kg |
| Becher | 450 | 260 | 117 | 0,3-0,5 | 3,5NL/kg | 5NL/kg |
| Verpackungs-Behälter | 1200 | 180 | 216 | 0,2-0,4 | 5NL/kg | 7NL/kg |

<1>: Die Dichte bezieht sich auf einen zweilagigen Verbund, d. h. eine Lage Polystyrolschaum und eine ca. 10-15 μm dicke koextrudierte Schicht.

**Patentansprüche**

1. Verfahren zur Herstellung von einem mehrlagigen, vorzugsweise zweilagigen Verbund einer geschäumten Polystyrolfolie (30) mit einer koextrudierten, vorzugsweise ungeschäumten Folie (32, 34), insbesondere zur Weiterverarbeitung zu Etiketten oder Formkörpern unter Ausnutzung des Schrumpfvermögens der Folien, bei dem eine Polystyrolharzmasse zusammen mit Stickstoff als Treibmittel und einem Porenbildner aus der Düse (16) eines Extruders (2) extrudiert wird und die extrudierte Masse vor dem Abkühlen unter den Erweichungspunkt aufgeblasen wird, dadurch gekennzeichnet, daß als Treibmittel ausschließlich pro Kilogramm geschäumter Folie 1/30 bis 1/50 an Stickstoff in Normliter gemessen des Folienflächengewichtes in Gramm pro Quadratmeter gemessen eingesetzt wird, in Verbindung mit einer chemisch zersetzungsfähigen Pulvermischung, insbesondere aus Natriumbicarbonat und Zitronensäure, und die Steifigkeit und/oder Oberflächenbeschaffenheit der Folie durch das Aufblasverhältnis gesteuert wird.

2. Verfahren zur Herstellung von einem mehrlagigen, vorzugsweise zweilagigen Verbund einer geschäumten Polystyrolfolie (30) mit einer koextrudierten, vorzugsweise ungeschäumten Folie (32, 34), insbesondere zur Weiterverarbeitung zu Etiketten oder Formkörpern unter Ausnutzung des Schrumpfvermögens der Folien, bei dem Polystyrolharzmasse zusammen mit Kohlendioxid als Treibmittel und einem Porenbildner aus der Düse (16) eines Extruders (2) extrudiert wird und die extrudierte Masse vor dem Abkühlen unter den Erweichungspunkt aufgeblasen wird, dadurch gekennzeichnet, daß als Treibmittel ausschließlich pro Kilogramm geschäumter Folie 1/20 bis 1/35 an Kohlendioxid in Normliter gemessen des Folienflächengewichtes in Gramm pro Quadratmeter gemessen eingesetzt wird in Verbindung mit einer Pulvermischung aus Natriumbicarbonat und Zitronensäure, und die Steifigkeit und/oder Oberflächenbeschaffenheit der Folie durch das Aufblasverhältnis gesteuert wird.

3. Verfahren zur Herstellung von einem mehrlagigen, vorzugsweise zweilagigen Verbund einer geschäumten Polystyrolfolie (30) mit einer koextrudierten, vorzugsweise ungeschäumten Folie (32, 34), insbesondere zur Weiterverarbeitung zu Etiketten oder Formkörpern unter Ausnutzung des Schrumpfvermögens der Folien, bei dem eine Polystyrolharzmasse zusammen mit einem Treibmittel und einem Porenbildner aus der Düse (16) eines Extruders (2) extrudiert wird und die extrudierte Masse vor dem Abkühlen unter den Erweichungspunkt aufgeblasen wird, dadurch gekennzeichnet, daß als Treibmittel eine Mischung von Kohlendioxid und Stickstoff eingesetzt wird, pro Kilogramm der Folie 1/20 bis 1/50 in Normliter gemessen des Folienflächengewichtes in Gramm pro Quadratmeter gemessen, in Verbindung mit einer Pulvermischung aus Natriumbicarbonat und Zitronensäure, und die Steifigkeit und/oder Oberflächenbeschaffenheit der Folie durch das Aufblasverhältnis gesteuert wird.

4. Verfahren nach einem der Ansprüche 1 bis 3, dadurch gekennzeichnet, daß der Anteil an Porenbildner im Bereich zwischen 0,2 und 1,0 Gewichtsprozenten der geschäumten Folie liegt.

5. Verfahren nach einem der Ansprüche 1 bis 4, dadurch gekennzeichnet, daß die Dichten der Verbundfolie im Bereich von ca. 160 bis ca. 340 g/l liegen.

6. Verfahren nach einem der Ansprüche 1 bis 5, dadurch gekennzeichnet, daß die Dicke der Verbundfolie etwa im Bereich von 80 bis 1200 $\mu$m liegt.

7. Verfahren nach einem der Ansprüche 1 bis 6, dadurch gekennzeichnet, daß das Polystyrolharz mit einem mittleren Molekulargewicht im Bereich zwischen 20 und $32 \times 10^4$, vorzugsweise von etwa $24 \times 10^4$, gemessen nach der Gelpermeations-Chromatographie-Methode, verwendet wird.

8. Verfahren nach Anspruch 7, dadurch gekennzeichnet, daß das Polystyrolharz aus einer Abmischung hochmolekularer und niedrigmolekularer Polystyrolharze besteht.

9. Verfahren nach einem der Ansprüche 1 bis 8, dadurch gekennzeichnet, daß das Polystyrolharz einen niedrigen Erweichungspunkt hat, der im Bereich zwischen 89 und 102° C liegt.

10. Verfahren nach einem der Ansprüche 1 bis 9, dadurch gekennzeichnet, daß das Aufblasverhältnis D2/D1 größer als 1,5 gehalten wird.

## Claims

1. Process for producing a multi-layer, preferably double-layer composite of a foamed polystyrene film (30) and a coextruded, preferably unfoamed film (32, 34), in particular for further processing to form labels or mouldings while utilising the shrinkability of the films, in which process a polystyrene resin composition is extruded from the nozzle (16) of an extruder (2) together with nitrogen as a propellent and a pore-forming material, and the extruded composition is expanded before cooling below the softening point, characterised in that 1/30 to 1/50 of nitrogen, measured in standard litres, of the weight per unit area of the film, measured in grammes per square metre, is used exclusively as propellent per kilogramme of foamed film, in conjunction with a chemically decomposable powder mixture, in particular of sodium bicarbonate and citric acid, and the rigidity and/or surface finish of the film is controlled by means of the expansion ratio.

2. Process for producing a multi-layer, preferably double-layer composite of a foamed polystyrene film (30) with a coextruded, preferably unfoamed film (32, 34), in particular for further processing to form labels or mouldings while utilising the shrinkability of the films, in which process polystyrene resin composition is extruded from the nozzle (16) of an extruder (2) together with carbon dioxide as a propellent and a pore-forming material, and the extruded composition is expanded before cooling below the softening point, characterised in that 1/20 to 1/35 of carbon dioxide, measured in standard litres, of the weight per unit area of the film, measured in grammes per square metre, is used exclusively as propellent per kilogramme of foamed film, in conjunction with a powder mixture of sodium bicarbonate and citric acid, and the rigidity and/or surface finish of the film is controlled by means of the expansion ratio.

3. Process for producing a multi-layer, preferably double-layer composite of a foamed polystyrene film (30) with a coextruded, preferably unfoamed film (32, 34), in particular for further processing to form labels or mouldings while utilising the shrinkability of the films, in which process a polystyrene resin composition is extruded from the nozzle (16) of an extruder (2) together with a propellent and a pore-forming material, and the extruded composition is expanded before cooling below the softening point, characterised in that a mixture of carbon dioxide and nitrogen is used as a propellent, 1/20 to 1/50, measured in standard litres, of the weight per unit area of the film, measured in gramme per square metre, per kilogramme of film, in conjunction with a powder mixture of sodium bicarbonate and citric acid, and the rigidity and/or surface finish of the film is controlled by means of the expansion ratio.

4. Process according to one of claims 1 to 3,
characterised in that the amount of pore-forming material lies in the range between 0.2 and 1.0 per cent by weight of the foamed film.

5. Process according to one of claims 1 to 4,
characterised in that the densities of the composite film lie in the range from about 160 to about 340 g/l.

6. Process according to one of claims 1 to 5,
characterised in that the thickness of the composite film lies approximately in the range from 80 to 1,200 µm.

7. Process according to one of claims 1 to 6,
characterised in that the polystyrene resin having an average molecular weight in the range between 20 and $32 \times 10^4$, preferably of about $24 \times 10^4$, measured by the gel permeation chromatography method, is used.

8. Process according to claim 7, characterised in that the polystyrene resin consists of a mixture of high molecular and low molecular polystyrene resins.

9. Process according to one of claims 1 to 8,
characterised in that the polystyrene resin has a low solftening point, which lies in the range between 89 and 102°C.

10. Process according to one of claims 1 to 9,
characterised in that the expansion ratio $D_2/D_1$ is kept greater than 1.5.

**Revendications**

1. Procédé de fabrication de matériau composite à couches multiples, de préférence à deux couches, d'une feuille en polystyrène alvéolaire (30), avec une feuille coextrudée (32,34), de préférence de type non cellulaire, en particulier pour fabriquer ensuite des étiquettes ou des corps façonnés, en utilisant la capacité de retrait des feuilles, dans lequel une masse de résine à base de polystyrène est extrudée, conjointement avec de l'azote, servant d'agent de gonflement, et un agent porogène, hors de la filière (16) d'une extrudeuse (2) et la masse extrudée étant traitée, au-dessous du point de ramollissement, avant refroidissement jusqu'à son gonflement, caractérisé en ce que l'on utilise comme produit de gonflement exclusivement, par kilogramme de feuille alvéolaire, de 1/30 à 1/50 d'azote mesuré en litres dans les conditions normales, rapporté à la masse surfacique des feuilles, exprimé en grammes par m$^2$, en liaison avec un mélange pulvérulent, chimiquement décomposable, en particulier composé à partir de carbonate de sodium et d'acide citrique, et la raideur et/ou la texture de surface de la feuille étant contrôlée par le taux de gonflement.

2.  Procédé de fabrication de matériau composite multicouches, de préférence à deux couches, fait d'une feuille en polystyrène alvéolaire (30), avec une feuille coextrudée (32, 34), de préférence non alvéolaire, en particulier pour la fabrication subséquente d'étiquettes ou de corps façonnés, en utilisant l'aptitude au retrait des feuilles, dans lequel une masse de résine à base de polystyrène est extrudée, conjointement avec du dioxyde de carbone, servant d'agent de gonflement, et un agent porogène, hors de la filière (16) d'une extrudeuse (2) et la masse extrudée soumise à l'agent de gonflement, avant refroidissement et au-dessous de son point de ramollissement, caractérisé en ce que l'on utilise comme agent de gonflement exclusivement, par kilogramme de feuille alvéolaire, de 1/20 à 1/35 de dioxyde de carbone mesuré en litres dans les conditions normales, rapporté à la masse surfacique des feuilles, exprimée en grammes par m$^2$, en liaison avec un mélange pulvérulent, décomposable chimiquement, en particulier composé à partir de carbonate de sodium et d'acide citrique, et la raideur et/ou la texture de surface de la feuille étant contrôlée par le taux de gonflement.

3.  Procédé de fabrication de matériau composite multicouches, de préférence à deux couches, d'une feuille en polystyrène alvéolaire (30), avec une feuille coextrudée (32, 34), de préférence non alvéolaire, en particulier pour fabriquer ensuite des étiquettes ou des corps mis en forme, en utilisant la capacité de retrait des feuilles, procédé dans lequel une masse de résine à base de polystyrène est extrudée, conjointement avec un agent de gonflement et un agent porogène, hors de la filière (16) d'une extrudeuse (2) et la masse extrudée étant gonflée avant refroidissement au-dessous du point de ramollissement, caractérisé en ce que l'on utilise comme agent de gonflement un mélange de dioxyde de carbone et d'azote, par kilogramme de feuille moussée, de 1/20 à 1/50 mesuré en litres dans les conditions normales, rapporté à la masse surfacique des feuilles, exprimée en grammes par m$^2$, en liaison avec un mélange pulvérulent, décomposable chimiquement, en particulier composé à partir de carbonate de sodium et d'acide citrique, et la raideur et/ou la texture de surface de la feuille étant contrôlé par le taux de gonflement.

4.  Procédé selon l'une des revendications 1 à 3, caractérisé en ce que la proportion d'agent porogène est située dans la plage comprise entre 0,2 et 1,0 pourcent en masse de la feuille alvéolaire.

5.  Procédé selon l'une des revendications 1 à 4, caractérisé en ce que les masses volumiques de la feuille composite sont situées dans la plage allant d'à peu près 160 à 340 g/l.

6.  Procédé selon l'une des revendications 1 à 5, caractérisé en ce que l'épaisseur de la feuille composite est située dans la plage allant d'à peu près 80 à 1200 μm.

7.  Procédé selon l'une des revendications 1 à 6, caractérisé en ce que l'on utilise de la résine polystyrène ayant un poids moléculaire moyen situé dans la plage comprise entre 20 et 32 x 10$^4$, de préférence d'à peu près 24 x 10$^4$, mesuré suivant la méthode par chromatographie par perméation du gel.

8.  Procédé selon la revendication 7, caractérisé en ce que l'on utilise de la résine polystyrène composée d'un mélange de résines polystyrène de poids moléculaires élevés et faibles.

9.  Procédé selon l'une des revendications 1 à 8, caractérisé en ce que la résine polystyrène présente un point de ramollissement bas, situé dans la plage comprise entre 89 et 102°C.

10. Procédé selon l'une des revendications 1 à 9, caractérisé en ce que le taux de gonflement D2/D1 est maintenu supérieur à 1,5.

FIG.1

EP 0 450 331 B1

# FIG.2

# FIG.3

# FIG.4